# EUROPÄISCHE PATENTSCHRIFT

(11) **EP 3 625 440 B1**
(45) Veröffentlichungstag und Bekanntmachung des Hinweises auf die Patenterteilung: **03.03.2021**
(21) Anmeldenummer: 18739759.1
(22) Anmeldetag: 27.06.2018
(51) Int. Cl.: F01D 9/02, F02C 3/16, F02C 3/14, F02C 7/12, F23R 3/00

(54) **VERFAHREN ZUR ERHÖHUNG DER LEISTUNG EINER GASTURBINE**
METHOD FOR IMPROVING THE PERFORMANCE OF A GAS TURBINE
PROCÉDÉ POUR AUGMENTER LA PUISSANCE D'UNE TURBINE À GAZ

(30) Priorität: 21.07.2017 DE 102017212575
(43) Veröffentlichungstag der Anmeldung: 25.03.2020
(73) Patentinhaber: Siemens Energy Global GmbH & Co. KG, 81739 München (DE)
(72) Erfinder: GIESEL, Rick, 45127 Essen (DE); LÜPFERT, Jannik, 45147 Essen (DE); VONNEMANN, Bernd, 45968 Gladbeck (DE)
(86) Internationale Anmeldenummer: PCT/EP2018/067190
(87) Internationale Veröffentlichungsnummer: WO 2019/015925

(56) Entgegenhaltungen:
- EP-A1- 2 341 287
- EP-A1- 3 104 077
- WO-A1-2017/032424

## Beschreibung

Die Erfindung betrifft ein Verfahren zur Erhöhung der Leistung einer Gasturbine, die eine Brennkammer, einen Läufer, der eine Welle und mehrere an der Welle axial benachbart angeordnete Turbinenlaufschaufelreihen umfasst, und eine stromaufwärts der Turbinenlaufschaufelreihen angeordnete, sich um die Welle erstreckende und trichterartig ausgebildete Nabe aufweist, an der axial benachbart mehrere Reihen von Hitzeschildelementen befestigt sind, die einen Großteil der radial auswärts weisenden Fläche der Nabe isolierend verkleiden und einen Teil eine Begrenzung der Brennkammer definieren, wobei die Hitzeschildelemente der in einer Stromabwärtsrichtung zuletzt angeordneten Reihe benachbart zu einem radial auswärts vorstehenden, umlaufend ausgebildeten Nabenvorsprung angeordnet sind und über in der Nabe ausgebildete Kühlluftbohrungen gekühlt werden.

Gasturbinen der eingangs genannten Art sind im Stand der Technik bereits bekannt. Exemplarisch sei an dieser Stelle auf den Gasturbinentyp SGT5-4000F der Siemens AG verwiesen.

Das Dokument EP2341287 A1 offenbart eine Gasturbine gemäß dem Stand der Technik.

Zur Leistungssteigerung solcher Gasturbinen ist es ferner bekannt, einzelne Komponenten der Gasturbine zu modifizieren. Derartige Modifikationen zielen darauf ab, den Strom des Heißgases durch die Turbine zu optimieren, den für den Betrieb der Gasturbine erforderlichen Kühlfluidmassenstrom zu reduzieren, etc. Sind von den Modifikation Komponenten des Läufers und/oder die Nabe betroffen, so ist es meist erforderlich, den Läufer auszubauen und vollständig zu entstapeln, um Arbeiten an der Welle, an den an dieser gehaltenen Bauteilen oder an der Nabe durchführen zu können. Ein solches Entstapeln des Läufers ist allerdings mit einem sehr hohen Aufwand verbunden und entsprechend nicht wünschenswert.

Ausgehend von diesem Stand der Technik ist es eine Aufgabe der vorliegenden Erfindung, ein Verfahren der eingangs genannten Art zu schaffen, mit dessen Hilfe die Leistung der Gasturbine mit vergleichsweise geringem Aufwand gesteigert werden kann.

Zur Lösung dieser Aufgabe schafft die vorliegende Erfindung ein Verfahren der eingangs genannten Art, das die Schritte aufweist: a) Ausbau des Läufers zusammen mit der diesen umgebenden Nabe aus der Gasturbine; b) horizontales Lagern des Läufers im nicht entstapelten Zustand, insbesondere auf geeigneten Lagerböcken; c) Entfernen sämtlicher Hitzeschildelemente der in Stromabwärtsrichtung zuletzt angeordneten Reihe; d) mechanisches Bearbeiten, insbesondere vollständiges Entfernen des Nabenvorsprungs; e) Bearbeitung zumindest einiger der vorhandenen Kühlluftbohrungen und/oder Erzeugung neuer Kühlluftbohrungen und f) Montage neuer Hitzeschildelemente, deren Design sich von dem der in Schritt c) entfernten Hitzeschildelemente unterscheidet.

Die Erfindung basiert auf dem Grundgedanken, die Hitzeschildelemente der in Stromabwärtsrichtung zuletzt angeordneten Reihe, also diejenigen Hitzeschildelemente, die unmittelbar benachbart zur Turbine positioniert sind, durch Hitzeschildelemente mit optimiertem Design auszutauschen, um auf diese Weise eine bessere Isolationswirkung erzielen und den für diese Hitzeschildelementreihe erforderlichen Kühlfluidmassenstrom entsprechend reduzieren zu können. Zu diesem Zweck wird der Läufer zusammen mit der diesen umgebenden Nabe in einem ersten Schritt aus der Gasturbine ausgebaut und horizontal im nicht entstapelten Zustand gelagert. Zur Lagerung können beispielsweise geeignete Lagerböcke verwendet werden, auf denen der Läufer angeordnet wird. In einem weiteren Schritt werden in diesem Zustand sämtliche Hitzeschildelemente der in Stromabwärtsrichtung zuletzt angeordneten Reihe entfernt, wodurch auch der angrenzende Nabenvorsprung freigelegt und entsprechend gut zugänglich ist. Anschließend wird der Nabenvorsprung im Rahmen eines oder mehrerer mechanischer Bearbeitungsschritte im nicht entstapelten und gelagerten Zustand bearbeitet, also verkleinert oder vollständig entfernt, wozu die Nabe relativ zum Läufer vorab fixiert werden kann. Ferner erfolgt eine Bearbeitung zumindest einiger der vorhandenen Kühlluftbohrungen, die darauf abzielt, die Gesamtöffnungsquerschnittsfläche der zur Kühlung der Hitzeschildelemente der letzten Reihe vorgesehenen Kühlluftbohrungen zu verringern, um während des Betriebs der Gasturbine den durch diese Kühlluftbohrungen strömenden Kühlfluidmassenstrom zu reduzieren und entsprechend die Leistung der Gasturbine zu optimieren. Im Rahmen der Bearbeitung können auch neue Kühlluftbohrungen eingebracht werden, solange die Gesamtöffnungsquerschnittsfläche der Kühlluftbohrungen nach der Bearbeitung kleiner als die Gesamtöffnungsquerschnittsfläche der vor der Bearbeitung vorhandenen Kühlluftbohrungen ist. In einem sich anschließenden Schritt werden neue Hitzeschildelemente montiert, deren Design sich von dem der in Schritt c) entfernten Hitzeschildelemente unterscheidet, insbesondere dahingehend, dass die mit den Hitzeschildelementen einhergehende Isolationswirkung verbessert wird, indem die neuen Hitzeschildelemente während des Betriebs der Gasturbine die abschirmende Funktion des entfernten Nabenvorsprungs übernehmen. Das erfindungsgemäße Verfahren zeichnet sich nicht nur durch die mit diesem einhergehende Leistungssteigerung der Gasturbine sondern auch durch den vergleichsweise geringen Aufwand aus, der mit der Durchführung des Verfahrens einhergeht. Letzterer ist insbesondere der Tatsache geschuldet, dass im Rahmen des erfindungsgemäßen Verfahrens auf ein Entstapeln des Läufers verzichtet wird.

Bevorzugt umfasst die mechanische Bearbeitung in Schritt d) einen Drehprozess. Auf diese Weise kann der Nabenvorsprung schnell und problemlos den Anforderungen entsprechend modifiziert oder entfernt werden.

Gemäß einer Ausgestaltung des erfindungsgemäßen Verfahrens wird zur Durchführung des Drehprozesses eine mobile Drehmaschine verwendet, die einen ringförmigen Träger, der konzentrisch zum Läufer angeordnet und ausgerichtet wird, und ein entlang des Trägers umlaufend und entlang mehrerer Achsen bewegbares Drehwerkzeug aufweist. Entsprechend lässt sich die Welle des horizontal gelagerten und nicht entstapelten Läufers in mehreren Achsen vor Ort bearbeiten. Insbesondere ist die Steuerung der Drehmaschine dabei dazu ausgelegt, radiale und axiale Abweichungen der Ausrichtung des Läufers und des Trägers zu kompensieren.

Der Träger ist vorteilhaft derart ausgebildet und wird derart angeordnet, dass er sich hauptsächlich am Untergrund, beispielsweise auf einem Hallenboden abstützt und nicht am zu bearbeitenden Läufer selbst, wodurch eine Belastung des Läufers durch das Eigengewicht der Drehmaschine während der Bearbeitung der Nabe verhindert wird. Hierzu wird der Träger der Drehmaschine insbesondere über Stützelemente am Untergrund abgestützt.

Zur Reduzierung des Kühlfluidmassenstroms wird in Schritt e) bevorzugt zumindest eine vorhandene Kühlluftbohrung, die insbesondere einen Durchmesser von 4 mm oder weniger aufweist, verstemmt, um diese ganz oder teilweise zu verschließen. Die verstemmte Kühlluftbohrung kann dann zur Erzeugung einer neuen Kühlluftbohrung wieder aufgebohrt werden, wobei der Durchmesser der neuen Kühlluftbohrung geringer als der Durchmesser der ursprünglichen bzw. verstemmten vorhandenen Kühlluftbohrung ist.

In Schritt e) kann alternativ oder zusätzlich zumindest eine vorhandene Kühlluftbohrung, die insbesondere einen Durchmesser von mehr als 4 mm aufweist, zumindest teilweise auf einen größeren Durchmesser aufgebohrt, mit einem Gewinde versehen und anschließend mit einem Gewindestopfen verschlossen werden, wobei der Gewindestopfen mit einem Durchgangsloch versehen sein kann, dessen Durchmesser kleiner als 4 mm ist und insbesondere im Bereich von 1,5 bis 2,5 mm liegt. Diese Vorgehensweise bietet sich zum Verschließen oder Verkleinern von vorhandenen Kühlluftbohrungen mit Durchmessern einer Größe an, die sich nicht ohne weiteres verstemmen lassen, was erfahrungsgemäß bei Durchmessern der Fall ist, die mehr als 4 mm betragen.

Bevorzugt wird in die zumindest eine vorhandene Kühlluftbohrung vor dem Aufbohren ein Wachskeil eingesetzt. Auf diese Weise kann verhindert werden, dass während des Aufbohrens Späne durch die Kühlluftbohrung ins Innere des nicht entstapelten Läufers fallen, wo diese nur schwer zu entfernen sind.

Gemäß einer Ausgestaltung der vorliegenden Erfindung werden in Schritt e) neue Kühlluftbohrungen unter Verwendung einer vorab gefertigten Bohrschablone erzeugt. Auf diese Weise kann eine gewünschte Positionierung der Bohrungen in einfacher Art und Weise sichergestellt werden.

Bevorzugt weisen die in Schritt f) neu montierten Hitzeschildelemente randseitig einen radial einwärts vorstehenden, insbesondere ringsegmentförmigen Vorsprung auf, der in Stromabwärtsrichtung weisend angeordnet wird und entsprechend die abschirmende Funktion des zuvor entfernten Nabenabsatzes übernimmt.

Weitere Merkmale und Vorteile des erfindungsgemäßen Verfahrens werden anhand der nachfolgenden Beschreibung einer Ausführungsform eines erfindungsgemäßen Verfahrens unter Bezugnahme auf die beiliegende Zeichnung deutlich.

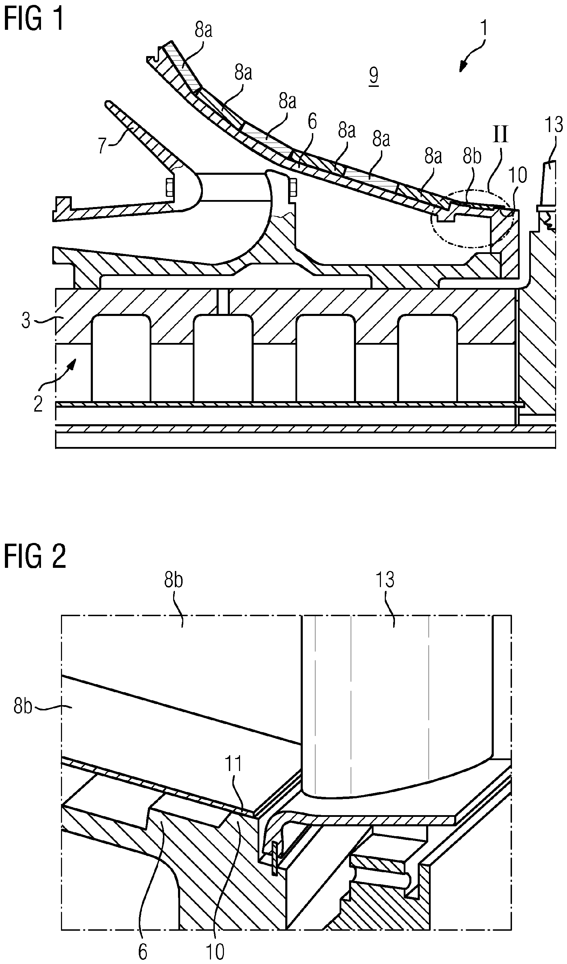

Darin ist
- Figur 1: eine schematische Schnittansicht eines Bereiches einer Gasturbine;
- Figur 2: eine vergrößerte perspektivische Ansicht des in Figur 1 mit dem Bezugszeichen II bezeichneten Ausschnitts;

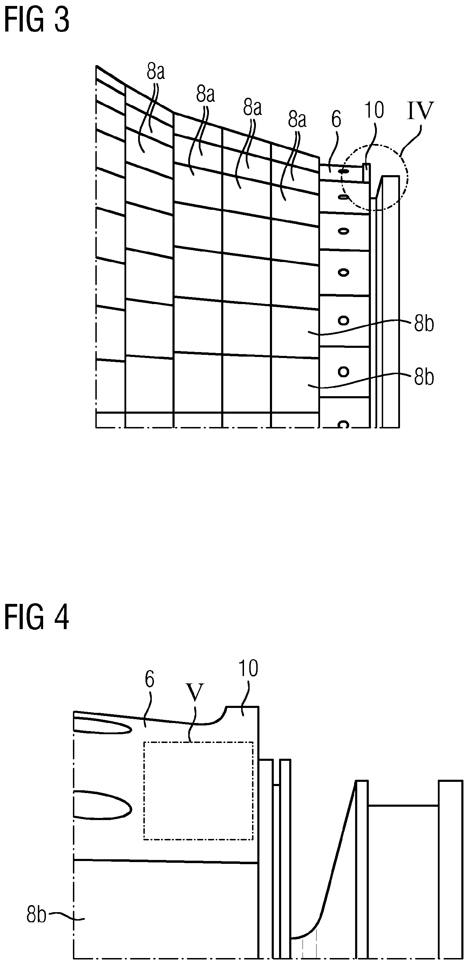

- Figur 3: eine Seitenansicht einer Nabe der in Figur 1 dargestellten Gasturbine, wobei zu Darstellungszwecken ein Hitzeschildelement der in einer Stromabwärtsrichtung zuletzt angeordneten Hitzeschildelementreihe entfernt ist;
- Figur 4: eine vergrößerte Ansicht des in Figur 3 mit den Bezugszeichen IV gekennzeichneten Ausschnitts;
- Figur 5: eine vergrößerte Ansicht des in Figur 4 mit dem Bezugszeichen V gekennzeichneten Ausschnitts, die einen Teilbereich eines Kühlluftbohrungsmusters der Nabe zeigt;
- Figur 6: eine perspektivische schematische Ansicht eines Läufers der in Figur 1 dargestellten Gasturbine während einer Bearbeitung der Nabe, wobei sich der Läufer in einem demontierten und aufgebockten Zustand befindet;
- Figur 7: eine Ansicht analog zu Figur 4 nach Durchführung der Bearbeitung gemäß Figur 5;
- Figur 8: eine vergrößerte Ansicht des in Figur 7 mit dem Bezugszeichen VIII gekennzeichneten Ausschnitts, der den in Figur 5 dargestellten Ausschnitt entspricht und einem neuen Kühlluftbohrungsmuster versehen ist;

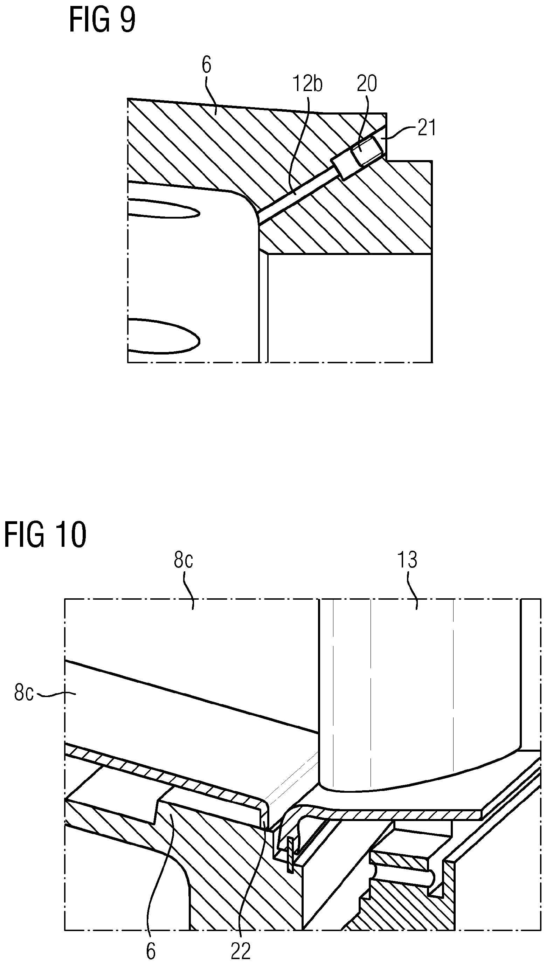

- Figur 9: eine Schnittansicht, die eine in Figur 7 dargestellte Kühlluftbohrung zeigt, und
- Figur 10: eine Ansicht analog zu Figur 2, die den entsprechenden Bereich mit neu montierten Hitzeschildelementen zeigt, deren Design sich von dem Design der Hitzeschildelemente gemäß Figur 2 unterscheidet.

Gleiche Bezugsziffern beziehen sich nachfolgend auf gleiche oder gleichartige Bauteile.

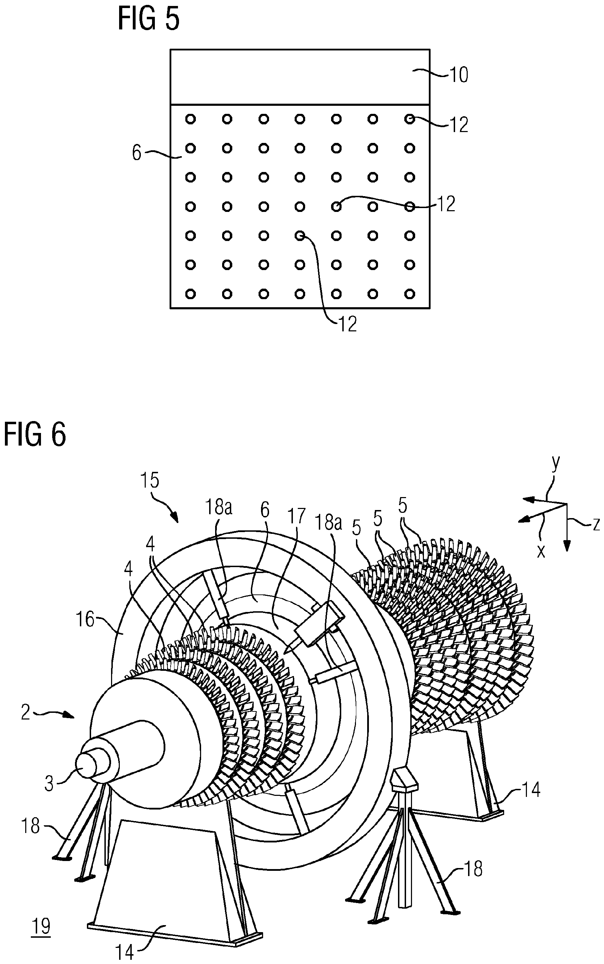

Die Gasturbine 1 umfasst einen Läufer 2 mit einer Welle 3, an der sowohl mehrere axial benachbart angeordnete Turbinenlaufschaufelreihen 4 eines Turbinenbereiches als auch mehrere benachbart angeordnete Verdichterlaufschaufelreihen 5 eines Verdichterbereiches der Gasturbine 1 angeordnet bzw. befestigt sind. Ferner umfasst die Gasturbine 1 eine sich um die Welle 3 erstreckende und trichterartig ausgebildete Nabe 6, die zwischen dem Turbinenbereich und dem Verdichterbereich angeordnet ist und sich in Richtung der Turbinenlaufschaufelreihen 4 und somit in einer Stromabwärtsrichtung im Durchmesser verjüngt. Die Nabe 6 ist konzentrisch zur Welle 3 unter Belassung eines radialen Ringspalts ausgerichtet und an einem Gehäuse 7 der Gasturbine 1 ortsfest gehalten, so dass sie nicht mit der Welle 3 dreht. An der Außenseite der Nabe 6 sind axial benachbart mehrere ringförmige Reihen von Hitzeschildelementen 8a,b befestigt, welche die radial auswärts weisende Fläche der Nabe 6 isolierend verkleiden und den inneren Teil der Begrenzung einer Brennkammer 9 der Gasturbine definieren, die sich ringförmig um die Welle 3 erstreckt. Die radial äußere Begrenzung der Brennkammer 9 erfolgt ebenfalls über nicht näher dargestellte Hitzeschildelemente, die an der Brennkammerausßenschale befestigt sind. Die Hitzeschildelemente 8b der in Stromabwärtsrichtung zuletzt angeordneten Hitzeschildelementreihe 4 unterscheiden sich vorliegend bezüglich ihres Designs von den Hitzeschildelementen 8a der übrigen Hitzeschildelementreihen und sind benachbart zu einem radial auswärts vorstehenden, umlaufend ausgebildeten Nabenvorsprung 10 angeordnet und überdecken diesen mit einem axial auswärts weisenden Vorsprung 11. Die Hitzeschildelemente 8 werden während des Betriebs der Gasturbine 1 unter Verwendung von Kühlluft gekühlt, die über in der Nabe 6 ausgebildete Kühlluftbohrungen 12 zugeführt wird. Die zur Kühlung der Hitzeschildelemente 8b vorgesehenen Kühlluftbohrungen 12 sind vorliegend, wie es in Figur 5 dargestellt ist, in einer regelmäßigen Matrix gleichmäßig voneinander beabstandet angeordnet und erstrecken sich jeweils senkrecht zur Außenfläche der Nabe 6.

Während des Betriebs der Gasturbine 1 wird im Verdichterbereich der Gasturbine 1 verdichtete Umgebungsluft mit einem Brennstoff gemischt, das entstehende Brennstoff-Luftgemisch in der Brennkammer 9 verbrannt und zum Turbinenbereich der Gasturbine 1 geleitet, wo das Heißgas über entsprechende Leitschaufelreihen 13 in strömungstechnisch günstiger Weise zu den jeweils benachbarten Turbinenlaufschaufelreihen 4 gelenkt wird, so dass der Läufer 2 in bekannter Weise drehend angetrieben wird. Ein Teil des in dem Verdichterbereich der Gasturbine 1 erzeugten verdichteten Luftstroms wird zur Kühlung der Hitzeschildelemente verwendet.

Zur Erhöhung der Leistung der Gasturbine 1 werden bei einem Verfahren gemäß einer Ausführungsform der vorliegenden Erfindung folgende Schritte durchgeführt:
In einem ersten Schritt wird der Läufer 2 zusammen mit der diesen umgebenden Nabe 6 aus der Gasturbine 1 ausgebaut. Anschließend wird der ausgebaute Läufer 2 im nicht entstapelten Zustand horizontal gelagert, was, wie es in Figur 5 dargestellt ist, unter Verwendung entsprechender Lagerböcke 14 erfolgt.

Nachfolgend werden in einem weiteren Schritt zumindest sämtliche Hitzeschildelemente 8b der in Stromabwärtsrichtung zuletzt angeordneten Turbinenlaufschaufelreihe 4 entfernt, um die Nabe 6 in diesem Bereich freizulegen.

In einem sich anschließendem Schritt wird eine mobile Drehmaschine 15 im Bereich des horizontal gelagerten Läufers 2 aufgebaut. Die mobile Drehmaschine umfasst einen ringförmigen Träger 16, der konzentrisch zu dem aufgebockten Läufer 2 angeordnet und ausgerichtet wird, und ein entlang des Trägers 16 umlaufend bewegbares Drehwerkzeug 17, das in X-, Y- und Z-Richtung zustellbar ist. Der Träger 16 stützt sich über ausfahrbare Zylinder 18a an der Nabe 6 ab. Zudem stützt sich der Träger 16 vorliegend über zwei Stützelemente 18 am Untergrund 19 ab. Auf diese Weise wird eine Belastung der Nabe 6 durch das Eigengewicht des Trägers 16 der Drehmaschine 15 verhindert.

Unter Einsatz der Drehmaschine 15, die in Figur 6 sehr schematisch dargestellt ist, wird nunmehr der Nabenvorsprung 11 im Rahmen einer Drehbearbeitung vollständig mechanisch entfernt. Die Steuerung der Drehmaschine 15 ist dabei bevorzugt derart ausgelegt, dass bei der Bearbeitung radiale und axiale Abweichungen der Ausrichtung des Nabenvorsprungs 11 und des Trägers 16 kompensiert werden. In diesem Zusammenhang sei auf die Anmeldung DE 102016219193.4 verwiesen, auf deren Inhalt hiermit vollumfänglich Bezug genommen wird. Weitere mechanische Bearbeitungsschritte können sich anschließen.

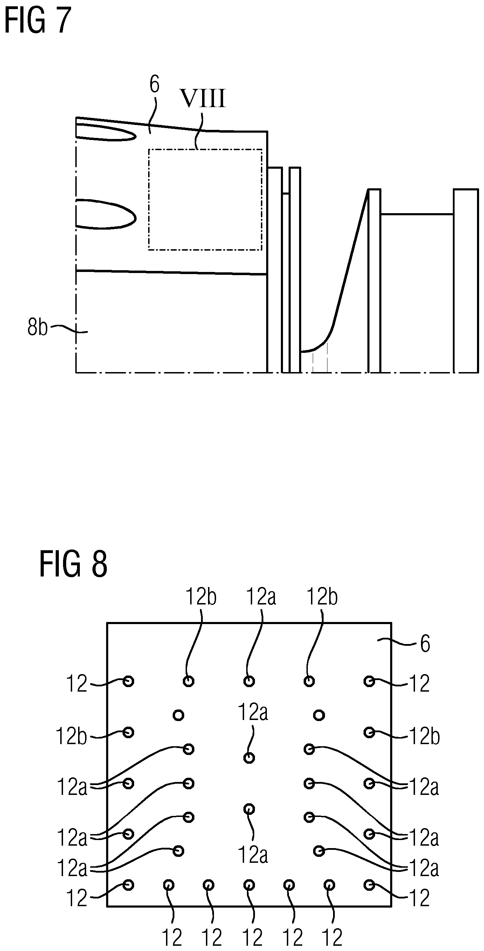

In einem weiteren Schritt werden zumindest einige der vorhandenen Kühlluftbohrungen 12 bearbeitet und vorliegend auch neue Kühlluftbohrungen erzeugt. Dieser Bearbeitungsschritt zielt darauf ab, die Gesamtöffnungsquerschnittsfläche der zur Kühlung der Hitzeschildelemente 8b der letzten Turbinenlaufschaufelreihe 4 eingesetzten Kühlluftbohrungen zu verringern, um während des Betriebs der Gasturbine 1 den durch diese Kühlluftbohrungen strömenden Kühlfluidmassenstrom zu reduzieren und entsprechend die Leistung der Gasturbine 1 zu optimieren. Im Rahmen dieser Kühlluftbohrungsbearbeitung werden vorliegend zumindest einige der vorhandenen Kühlluftbohrungen 12, die einen Durchmesser von 4 mm oder weniger aufweisen, verstemmt, um diese ganz zu verschließen. Solche verstemmten Kühlluftbohrungen sind anhand eines Vergleiches der Figuren 5 und 8 erkennbar. Es handelt sich um diejenigen Kühlluftbohrungen 12 der Figur 5, die in Figur 8 nicht mehr vorhanden sind. Ferner werden im Rahmen der Kühlluftbohrungsbearbeitung neue Luftbohrungen 12a gebohrt, deren Durchmesser bevorzugt im Bereich von 1,5 bis 2,5 mm liegen. Die neu gebohrten Kühlluftbohrungen 12a können bezüglich ihrer Position mit verschlossenen Kühlluftbohrungen 12a ganz oder teilweise zusammenfallen. Mit anderen Worten werden dann verstemmte Kühlluftbohrungen 12 zumindest teilweise wieder aufgebohrt, wobei der Durchmesser der neuen Kühlluftbohrungen 12a geringer als der Durchmesser der ursprünglichen verstemmten Kühlluftbohrungen 12 ist. Alternativ oder zusätzlich können auch vorhandene Kühlluftbohrungen 12, die einen Durchmesser von mehr als 4 mm aufweisen und sich nur schlecht verstemmen lassen, zumindest teilweise auf einen größeren Durchmesser aufgebohrt, mit einem Gewinde versehen und anschließend mit einem Gewindestopfen 20 verschlossen werden. Der Gewindestopfen 20 kann, wenn eine Kühlluftbohrung 12 nicht ganz verschlossen sondern nur verkleinert werden soll, mit einem Durchgangsloch 21 versehen sein, deren Durchmesser kleiner als 4 mm ist und insbesondere in Bereich von 1,5 bis 2,5 mm liegt. Vor einem Aufbohren einer Kühlluftbohrung 12 wird bevorzugt ein so genannter Wachskeil in die Kühlluftbohrung 12 eingesetzt, um zu verhindern, dass Späne durch die Nabe 6 in Richtung der Welle 3 fallen können, die nach der Bohrbearbeitung nur schwer wieder zu entfernen sind. Des Weiteren können im Rahmen der Kühlluftbohrungsbearbeitung, wie es in Figur 8 gezeigt ist, neue Kühlluftbohrung 12b hergestellt werden, die sich bezogen auf die radiale Richtung schräg durch die Nabe 6 erstrecken.

Bei sämtlichen Bohrprozessen können Bohrschablonen zum Einsatz kommen, welche die Positionen der zu erzeugenden Bohrungen und deren Durchmesser vorgeben, auch wenn dies optional ist. Da Bohrschablonen im Stand der Technik grundsätzlich bekannt sind, wird an dieser Stelle auf eine Darstellung einer exemplarischen Bohrschablone verzichtet.

In einem weiteren Schritt werden dann neue Hitzeschildelemente 8c montiert, welche die alten Hitzeschildelemente 8b ersetzen und deren Design sich von dem der Hitzeschildelemente 8b unterscheidet. Vorliegend weisen die neu montierten Hitzeschildelemente 8c randseitig einen radial einwärts vorstehenden, ringsegmentförmig ausgebildeten Vorsprung 22 auf, der in Stromabwärtsrichtung weisend angeordnet wird und die abschirmende Funktion des entfernten Nabenvorsprungs 10 übernimmt.

In einem letzten Schritt wird der unter Einsatz des erfindungsgemäßen Verfahrens modifizierte Läufer 2 wieder in die Gasturbine 1 eingebaut.

Ein wesentlicher Vorteil des zuvor beschriebenen Verfahrens besteht darin, dass die Leistung der Gasturbine 1 durch die Verkleinerung der Gesamtöffnungsquerschnittsfläche der zur Kühlung der Hitzeschildelemente der letzten Turbinenlaufschaufelreihe eingesetzten Kühlluftbohrungen optimiert wird, da weniger Kühlluft zur Kühlung der besagten Hitzeschildelemente benötigt wird. Ein weiterer Vorteil besteht darin, dass der Läufer zur Durchführung des zuvor beschriebenen Verfahrens nicht entstapelt werden muss, was vergleichsweise geringen Aufwand und Kosten nach sich zieht.

## Patentansprüche

1. Verfahren zur Erhöhung der Leistung einer Gasturbine (1), die eine Brennkammer (9), einen Läufer (2), der eine Welle (3) und mehrere an der Welle (3) axial benachbart angeordnete Turbinenlaufschaufelreihen (4) umfasst, und eine stromaufwärts der Turbinenlaufschaufelreihen (4) angeordnete, sich um die Welle (3) erstreckende und trichterartig ausgebildete Nabe (6) aufweist, an der axial benachbart mehrere Reihen von Hitzeschildelementen (8a,b) befestigt sind, die einen Großteil der radial auswärts weisenden Fläche der Nabe (6) isolierend verkleiden und einen Teil einer Begrenzung der Brennkammer (9) definieren, wobei die Hitzeschildelemente (8b) der in einer Stromabwärtsrichtung zuletzt angeordneten Reihe benachbart zu einem radial auswärts vorstehenden, umlaufend ausgebildeten Nabenvorsprung (10) angeordnet sind und über in der Nabe (6) ausgebildete Kühlluftbohrungen (12) gekühlt werden, umfassend die Schritte:
a) Ausbau des Läufers (2) zusammen mit der diesen umgebenden Nabe (6) aus der Gasturbine (1);
b) horizontales Lagern des Läufers (2) im nicht entstapelten Zustand, insbesondere auf geeigneten Lagerböcken (14) ;
c) Entfernen sämtlicher Hitzeschildelemente (8b) der in Stromabwärtsrichtung zuletzt angeordneten Reihe;
d) mechanisches Bearbeiten, insbesondere vollständiges Entfernen des Nabenvorsprungs (10);
e) Bearbeitung zumindest einiger der vorhandenen Kühlluftbohrungen (12) und/oder Erzeugung neuer Kühlluftbohrungen (12a,b) und
f) Montage neuer Hitzeschildelemente (8c), deren Design sich von dem der in Schritt c) entfernten Hitzeschildelemente (8b) unterscheidet.

2. Verfahren nach Anspruch 1,
**dadurch gekennzeichnet, dass**
die mechanische Bearbeitung in Schritt d) einen Drehprozess umfasst.

3. Verfahren nach Anspruch 2,
**dadurch gekennzeichnet, dass**
zur Durchführung des Drehprozesses eine mobile Drehmaschine (15) verwendet wird, die einen ringförmigen Träger (16), der konzentrisch zum Läufer (2) angeordnet und ausgerichtet wird, und ein entlang des Trägers (16) umlaufend und entlang mehrerer Achsen bewegbares Drehwerkzeug (17) aufweist.

4. Verfahren nach Anspruch 3,
**dadurch gekennzeichnet, dass**
der Träger (16) der Drehmaschine (15) über Stützelemente (18) am Untergrund abgestützt wird.

5. Verfahren nach einem der vorhergehenden Ansprüche,
**dadurch gekennzeichnet, dass**
in Schritt e) zumindest eine vorhandene Kühlluftbohrung (12), die insbesondere einen Durchmesser von 4 mm oder weniger aufweist, verstemmt wird.

6. Verfahren nach Anspruch 5,
**dadurch gekennzeichnet, dass**
zumindest eine verstemmte vorhandene Kühlluftbohrung (12) zur Erzeugung einer neuen Kühlluftbohrung (12a,b) wieder aufgebohrt wird, wobei der Durchmesser der neuen Kühlluftbohrung (12a,b) geringer als der Durchmesser der verstemmten vorhandenen Kühlluftbohrung (12) ist.

7. Verfahren nach einem der vorhergehenden Ansprüche,
**dadurch gekennzeichnet, dass**
in Schritt e) zumindest eine vorhandene Kühlluftbohrung (12a,b), die insbesondere einen Durchmesser von mehr als 4 mm aufweist, zumindest teilweise auf einen größeren Durchmesser aufgebohrt, mit einem Gewinde versehen und anschließend mit einem Gewindestopfen (20) verschlossen wird, wobei der Gewindestopfen (20) mit einem Durchgangsloch (21) versehen sein kann, dessen Durchmesser kleiner als 4 mm ist und insbesondere im Bereich von 1,5 bis 2,5 mm liegt.

8. Verfahren nach Anspruch 7,
**dadurch gekennzeichnet, dass**
in die zumindest eine vorhandene Kühlluftbohrung (21) vor dem Aufbohren ein Wachskeil eingesetzt wird.

9. Verfahren nach einem der vorhergehenden Ansprüche,
**dadurch gekennzeichnet, dass**
in Schritt e) neue Kühlluftbohrungen (12a,b) unter Verwendung einer vorab gefertigten Bohrschablone erzeugt werden.

10. Verfahren nach einem der vorhergehenden Ansprüche,
**dadurch gekennzeichnet, dass**
die in Schritt f) neu montierten Hitzeschildelemente (8c) randseitig einen radial einwärts vorstehenden, insbesondere ringsegmentförmigen Vorsprung (22) aufweisen, der in Stromabwärtsrichtung weisend angeordnet wird.

## Claims

1. Method for increasing the performance of a gas turbine (1) which has a combustion chamber (9), a rotor (2) which comprises a shaft (3) and a plurality of turbine rotor blade rows (4) which are arranged in an axially adjacent manner on the shaft (3), and a hub (6) which is arranged upstream of the turbine rotor blade rows (4), extends around the shaft (3), is of funnel-like configuration, and to which a plurality of rows of heat shield elements (8a, 8b) are fastened in an axially adjacent manner, which heat shield elements (8a, 8b) cover a large part of the radially outwardly pointing face of the hub (6) in an insulating manner and define a part of a boundary of the combustion chamber (9), the heat shield elements (8b) of the row which is arranged as the last row in a flow downstream direction being arranged adjacently with respect to a radially outwardly projecting hub projection (10) of circumferential configuration, and being cooled via cooling air bores (12) which are configured in the hub (6), comprising the steps:
a) dismantling of the rotor (2) together with the hub (6) which surrounds it from the gas turbine (1);
b) horizontal mounting of the rotor (2) in the non-destacked state, in particular on suitable bearing blocks (14);
c) removing of all heat shield elements (8b) of the row which is arranged as the last row in the flow downstream direction;
d) mechanical machining, in particular complete removing of the hub projection (10);
e) machining of at least some of the existing cooling air bores (12) and/or producing of new cooling air bores (12a, 12b), and
f) mounting of new heat shield elements (8c), the design of which differs from that of the heat shield elements (8b) which were removed in step c).

2. Method according to Claim 1, **characterized in that** the mechanical machining in step d) comprises a turning process.

3. Method according to Claim 2, **characterized in that**, in order to carry out the turning process, a mobile turning machine (15) is used which has an annular carrier (16) which is arranged and oriented concentrically with respect to the rotor (2), and a turning tool (17) which can be moved along the carrier (16) circumferentially and along a plurality of axes.

4. Method according to Claim 3, **characterized in that** the carrier (16) of the turning machine (15) is supported on the underlying surface via supporting elements (18).

5. Method according to one of the preceding claims, **characterized in that**, in step e), at least one existing cooling air bore (12) which has, in particular, a diameter of 4 mm or less is calked.

6. Method according to Claim 5, **characterized in that** at least one calked existing cooling air bore (12) is drilled out again in order to produce a new cooling air bore (12a, 12b), the diameter of the new cooling air bore (12a, 12b) being smaller than the diameter of the calked existing cooling air bore (12).

7. Method according to one of the preceding claims, **characterized in that**, in step e), at least one existing cooling air bore (12a, 12b) which has, in particular, a diameter of more than 4 mm, is drilled out at least partially to a greater diameter, is provided with a thread, and is subsequently closed by way of a threaded plug (20), it being possible for the threaded plug (20) to be provided with a through hole (21), the diameter of which is smaller than 4 mm and, in particular, lies in the range from 1.5 to 2.5 mm.

8. Method according to Claim 7, **characterized in that** a wax wedge is inserted into the at least one existing cooling air bore (21) before it is drilled out.

9. Method according to one of the preceding claims, **characterized in that**, in step e), new cooling air bores (12a, 12b) are produced with the use of a prefabricated drilling template.

10. Method according to one of the preceding claims, **characterized in that** the heat shield elements (8c) which are newly mounted in step f) have, on the edge side, a radially inwardly projecting, in particular ring segment-shaped projection (22) which is arranged so as to point in the flow downstream direction.

## Revendications

1. Procédé pour augmenter la puissance d'une turbine (1) à gaz, qui a une chambre de combustion (9), un rotor (2), qui comprend un arbre (3) et plusieurs rangées (4) d'aubes mobiles de turbine, montées en étant voisines axialement sur l'arbre (3), et un moyeu (6), disposé en amont des rangées (4) d'aubes mobiles de turbines, s'étendant autour de l'arbre (3) et constitué à la manière d'un entonnoir, moyeu sur lequel sont fixées, en étant voisines axialement, plusieurs rangées d'éléments (8a, b) de bouclier thermique, qui habillent, en l'isolant, une grande partie de la surface, tournée vers l'extérieur radialement, du moyeu (6) et définissent une partie d'une limitation de la chambre de combustion (9), les éléments (8b) de bouclier thermique de la rangée disposée en dernier dans le sens en aval de l'écoulement étant disposés au voisinage d'une saillie (10) du moyeu, en saillie vers l'extérieur radialement et constituée en faisant le tour, et étant refroidis par des ouïes (12) d'air de refroidissement constituées dans le moyeu (6), comprenant les stades :
a) démontage du rotor (2), ensemble avec le moyeu (6) qui l'entoure, de la turbine (1) à gaz ;
b) dépôt horizontal du rotor (2) à l'état désempilé, notamment sur des tréteaux (14) appropriés ;
c) enlèvement de l'ensemble des éléments (8b) de bouclier thermique de la rangée disposée en dernier dans le sens en aval ;
d) usinage mécanique, notamment élimination complète de la saillie (10) du moyeu ;
e) usinage au moins de certaines des ouïes (12) d'air de refroidissement présentes et/ou production de nouvelles ouïes (12a, b) d'air de refroidissement et
f) montage de nouveaux éléments (8c) de bouclier thermique, dont la conception se distingue de celle des éléments (8b) de bouclier thermique enlevés au stade c).

2. Procédé suivant la revendication 1,
**caractérisé en ce que**
l'usinage mécanique au stade d) comprend une opération au tour.

3. Procédé suivant la revendication 2,
**caractérisé en ce que**,
pour effectuer l'opération au tour, on utilise un tour (15) mobile, qui a un support (16) annulaire, disposé et orienté concentriquement au rotor (2), et un outil (17) de tournage faisant le tour du support (16) et mobile le long de plusieurs axes.

4. Procédé suivant la revendication 3,
**caractérisé en ce que**
l'on soutient le support (16) du tour (15) par des éléments (18) d'appui au sol.

5. Procédé suivant l'une des revendications précédentes,
**caractérisé en ce qu'**
au stade e), on mate au moins une ouïe (12) d'air de refroidissement présente, qui a notamment un diamètre de 4 mm ou moins.

6. Procédé suivant la revendication 5,
**caractérisé en ce que**
l'on alèse à nouveau au moins une ouïe (12) d'air de refroidissement présente matée pour produire une nouvelle ouïe (12a, b) d'air de refroidissement, le diamètre de la nouvelle ouïe (12a, b) d'air de refroidissement étant plus petit que le diamètre de l'ouïe (12) d'air de refroidissement présente matée.

7. Procédé suivant l'une des revendications précédentes,
**caractérisé en ce qu'**
au stade e), on alèse, au moins en partie, à un diamètre plus grand, au moins une ouïe (12a, b) d'air de refroidissement présente, qui a notamment un diamètre de plus de 4 mm, on la munit d'un taraudage et on la ferme ensuite par un bouchon (20) fileté, le bouchon (20) fileté pouvant être pourvu d'un trou (21) traversant, dont le diamètre est plus petit que 4 mm, en étant notamment dans la plage de 1,5 à 2,5 mm.

8. Procédé suivant la revendication 7,
**caractérisé en ce que**
l'on insère un coin de cire avant l'alésage dans la au moins une ouïe (21) d'air de refroidissement présente.

9. Procédé suivant l'une des revendications précédentes,
**caractérisé en ce qu'**
au stade e), on produit de nouvelles ouïes (12a, b) d'air de refroidissement, en utilisant un gabarit d'alésage fabriqué au préalable.

10. Procédé suivant l'une des revendications précédentes,
**caractérisé en ce que**
les nouveaux éléments (8c) de bouclier thermique au stade f) ont, du côté du bord, une saillie (22) en saillie vers l'intérieur radialement, notamment en forme de segment annulaire, qui est disposée en étant tournée dans le sens en aval.
